# EUROPÄISCHE PATENTSCHRIFT

(11) **EP 1 167 274 B1**
(45) Veröffentlichungstag und Bekanntmachung des Hinweises auf die Patenterteilung: **20.07.2005**
(21) Anmeldenummer: 01107132.1
(22) Anmeldetag: 22.03.2001
(51) Int. Cl.: B66F 3/06, F16G 13/18

(54) **Einrichtung zur Übertragung einer Kraft, insbesondere Druckkraft, längs einer im wesentlichen geraden Strecke**
Device for transmitting a force, in particular a compressive force, along a substantially streight path
Dispositif de transmission d'une force, notamment d'une force de compression, le long d'un trajet sensiblement rectiligne

(30) Priorität: 19.06.2000 DE 10029160
(43) Veröffentlichungstag der Anmeldung: 02.01.2002
(73) Patentinhaber: Grasl, Andreas, 3452 Heiligeneich (AT)
(72) Erfinder: Grasl, Andreas, 3452 Heiligeneich (AT)
(74) Vertreter: Schubert, Siegmar, Dipl.-Ing.

(56) Entgegenhaltungen:
- WO-A-98/46903
- DE-A- 19 710 450

## Beschreibung

Die Erfindung betrifft eine Einrichtung zur Übertragung einer Kraft, insbesondere Druckkraft, längs einer im wesentlichen geraden Strecke mit mindestens einem zwei länglichen, gegliederten, einseitig krümmungsfähigen Übertragungselementen nach dem Oberbegriff des Anspruchs 1.

Bei einer bekannten Einrichtung dient als ein einseitig krümmungsfähiges Übertragungselement ein Zahnriemen, der auf seiner Rückseite klötzchenartige Erhebungen aufweist, die auf der geraden Stecke bei Übertragung der Druckkraft aufeinanderliegen (US-A-5 692 884). Der Zahnriemen ist in einem Gehäuse mit einem Basisteil umgekehrt U-förmig gelagert, wozu unter anderem ein in dem Gehäuse befestigtes Führungselement dient. Der Zahnriemen wird auf einer gezahnten Seite mit einer Zahnrolle angetrieben und in dem Basisteil, in dem er aus dem Gehäuse heraustritt, umgelenkt. Das kompliziert ausgebildete Basisteil, an dem der Zahnriemen umgelenkt wird, schließt eine offene Seite eines im übrigen allseitig geschlossenen becherförmigen Gehäuses ab. In dem Gehäuse ist eine obere, umgekehrt U-förmige Umlenkstelle des Zahnriemens angeordnet, beispielsweise in Form einer Zahnrolle einerseits und eines im Abstand zu dieser angebrachten gekrümmten Führungsblechs andererseits. - Bei der Montage ist die Lage des Zahnriemens schwer kontrollierbar, da die in dem Gehäuse angebrachten Führungsbleche nur nach Aufschieben des Gehäuses auf das Basisteil wirksam sind und von außen in ihrem Zusammenwirken mit dem Zahnriemen nicht ohne weiteres sichtbar sind.

Zum Stand der Technik gehört auch eine Anordnung von zwei länglichen, gegliederten, einseitig krümmungsfähigen Übertragungselementen, die im wesentlichen längs einer geraden Strecke und in einem gemeinsamen geraden Führungskanalabschnitt reißverschlußartig zusammengeführt sind (WO-A-98/46903). Beidseitig des gemeinsamen geraden Führungsabschnitts sind dabei zwei Zahnrollen angeordnet, von denen je eine in eines der beiden Übertragungselemente eingreift, dieses antreibt und aus je einem einzelnen Führungskanalabschnitt eines Führungskanals in den gemeinsamen geraden Führungskanalabschnitt des Führungskanals umlenkt. Diese Einrichtung weist ein Führungskanalteil auf, aus dem der gemeinsamen gerade Führungskanalabschnitt für beide miteinander verzahnten Übertragungselemente und beidseitig dazu die einzelnen geradlinigen Führungskanalabschnitte teilweise ausgeformt sind. Es ist nicht ohne weiteres ersichtlich, wie dieses Führungskanalteil mit den länglichen, gegliederten, einseitig krümmungsfähigen Übertragungselementen in einem Gehäuse einzuordnen ist.

Aus der Praxis ist es weiterhin bekannt, eine Einrichtung der voranstehenden Art mit einem Kunststofführungsteil auszubilden, welches in ein Aluminiumgehäuse, bestehend aus einem Vierkantprofil, geschoben werden kann. Auch in diesem Fall ist die ordnungsgemäße Führung der Übertragungselemente mit dem eingeschobenen Kunststofführungsteil nicht ohne weiteres von außen kontrollierbar. Nachteilig ist ferner, daß bei einer später gewünschten Entfernung des Kunststofführungsteils aus dem Gehäuse dieses teilweise zerstört werden muß.

Der vorliegenden Erfindung liegt daher die Aufgabe zugrunde, ein montagegünstigeres Gehäuse zu schaffen.

Diese Aufgabe wird durch die Ausbildung des Gehäuses mit den in dem kennzeichnenden Teil des Anspruchs 1 angegebenen Merkmalen gelöst.

Dieses Gehäuse ist montagegünstig und insbesondere reparaturgünstig. Infolge der Zweiteilung des Gehäuses in dessen Längsrichtung können die in ihm angeordneten Teile gut kontrolliert werden, und das Gehäuse kann mit der kontrollierten Position der Teile einfach geschlossen werden. Ebenso umkompliziert läßt sich das Gehäuse zur Kontrolle oder in einem Reparaturfall wieder öffnen, wonach in dem Gehäuse untergebrachte Elemente kontrolliert und erforderlichenfalls ausgetauscht werden können. Infolge der Zweiteilung in der Längsrichtung kann das Gehäuse günstig gefertigt und im Bedarfsfall innen bearbeitet werden. Infolge der Schraubkanäle können fertigungsgünstig Varianten der Einrichtung hergestellt werden, die Verschraubungen an unterschiedlichen Positionen längs der Schraubkanäle erfordern.

In einer robusten Variante des Gehäuses ist nach Anspruch 2 der Führungskanal einschließlich eines seitlich offenen Führungskanalabschnitts aus dem ersten der beiden Gehäuseteile innen ausgeformt, und aus dem zweiten der beiden Gehäuseteile ist innen ein Steg ausgeformt, der zumindest an dem seitlich offenen Führungskanalabschnitt seitlich zur Anlage gelangt, wenn die beiden Gehäuseteile miteinander verschraubt sind.

Bei der darauf beruhenden speziellen Ausbildung nach Anspruch 3 ist nur mindestens einer von mehreren geraden Führungskanalabschnitten seitlich offen aus dem ersten Gehäuseteil ausgeformt. Bei der Montage kann das Übertragungselement einfach in den offenen Führungskanalabschnitt eingelegt werden und kann von diesem erforderlichenfalls in einen weiteren, anschließenden Führungskanalabschnitt eingeschoben werden, woran das Übertragungselement in dem weiteren, weitgehend geschlossenen Führungskanalabschnitt sicher geführt wird. Insbesondere kann das Übertragungselement durch eine stirnseitige Öffnung des weiteren Führungskanalabschnitts in diesen eingeschoben werden.

In einer besonders zweckmäßigen Variante nach Anspruch 4 sind alle einzelnen geraden Führungskanalabschnitte seitlich vollständig offen aus dem ersten der beiden Gehäuseteile innen ausgeformt. Aus dem zweiten der beiden Gehäuseteile sind innen Stege ausgeformt, die zumindest für die seitliche Führung des Übertragungselements in dem Führungskanal wesentlichen Abschnitt seitlich abdekken, wenn die beiden Gehäuseteile miteinander verschraubt sind. Bei dieser Variante kann jedes Übertragungselement einfach seitlich in die offenen Führungskanalabschnitte eingelegt werden und hinsichtlich seiner eingenommenen Lage kontrolliert werden. Durch die Stege, die beim Verschrauben der beiden Gehäuseteile an den zunächst offenen Führungskanalabschnitten seitlich anliegen und diese schließen, wird eine zuverlässige seitliche Führung des Übertragungselements erreicht.

Zur wenig aufwendigen Herstellung der Einrichtungsvariante, die gemäß Anspruch 5 einen Führungskanal aufweist, der beidseitig des gemeinsamen geraden Führungskanalabschnitts im wesentlichen U-förmig mit je einem gekrümmten Umlenkabschnitt zwischen zwei geraden Führungskanalabschnitten ausgebildet ist, sind aus wenigstens dem einen den beiden Gehäuseteile nur die geraden Führungsabschnitte ausgeformt, und die gekrümmten Umlenkabschnitte sind durch Umlenkteile gebildet, die mit Schraubkanälen in die ersten Gehäuseteile verschraubt sind. Es liegt hier eine besonders zweckmäßige Aufteilung zwischen den stets benötigten geraden Führungskanalabschnitten und den gekrümmten Umlenkabschnitten des Führungskanals hinsichtlich der Herstellung dieser Abschnitte vor. Die Umlenkabschnitte werden nicht bei jeder Konfiguration der Einrichtung, insbesondere bei kurzen Übertragungselementen, benötigt, so daß sie gegebenenfalls entfallen können.

Weiterhin ist das quaderförmige, längliche Gehäuse der Einrichtung gemäß Anspruch 6 zweckmäßig an dessen Stirnseiten mit Deckeln verschlossen, die mit den Schraubkanälen in den Gehäusehälften verschraubt sind. Es können so aus dem längeren Gehäuseprofil verschieden lange Gehäuseabschnitte abgetrennt werden und durch die Deckel zu einem geschlossenen Gehäuse ergänzt werden.

Zur paßgenauen Bohrung der Löcher für die Schrauben, die in den Schraubkanälen in dem Gehäuseinnern in Schraubverbindung treten sollen, sind aus den Gehäusehälften außen gemäß Anspruch 7 Bohrzentrierungen ausgeformt, die mit den Schraubkanälen in dem Gehäuseinnern fluchten.

Das Gehäuse ist besonders geeignet zur Realisierung des geraden Führungskanalabschnitts, längs dessen die beiden miteinander verzahnten Übertragungselemente reißverschlußartig zusammengeführt nach außen geleitet werden, um außen eine Kraft auf ein zu betätigendes Teil, beispielsweise ein Fenster, auszuüben, welches durch einen Antrieb in dem Gehäuse zu betätigen ist.

Ausführungsbeispiele der Erfindung werden im folgenden anhand einer Zeichnung mit sechs Figuren erläutert, aus denen sich weitere Merkmale und Vorteile der Erfindung ergeben können. Es zeigen:
- Figur 1: einen Längsschnitt durch die Einrichtung mit einem zweiteiligen Gehäuse,
- Figur 2: eine Draufsicht auf die Einrichtung bei einem entfernten Gehäuseteil, teilweise geschnitten,
- Figur 3: einen Querschnitt A-A gemäß Figur 2,
- Figur 4: eine Ansicht auf eine Stirnseite der Erfindung,
- Figur 5: in größerer Darstellung eine Ansicht auf die Stirnseite einer ersten Variante des zweiteiligen Gehäuses und
- Figur 6: ebenfalls in größerer Darstellung eine Ansicht auf die Stirnseite einer zweiten Variante des zweiteiligen Gehäuses.

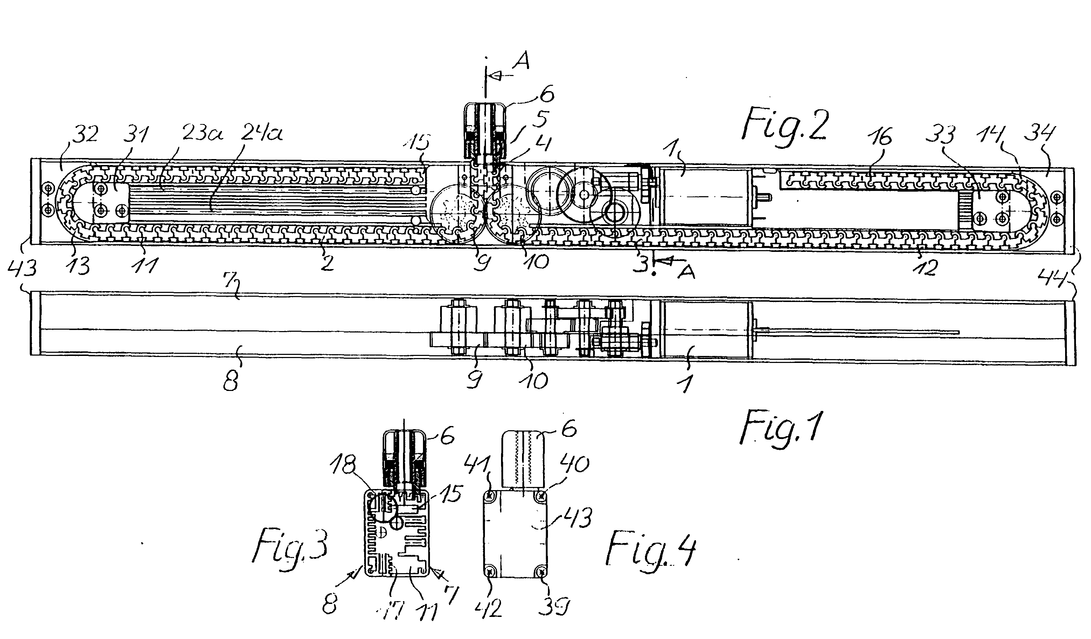

In den Figuren 1 - 4 ist eine Einrichtung zur Übertragung einer Kraft, insbesondere einer Druckkraft, von einem Antriebsmotor 1 zu einem nicht dargestellten zu betätigenden Bauteil, insbesondere einer Klappe oder Kuppel, mittels miteinander verzahnter, länglicher, gegliederter, einseitig krümmungsfähiger Übertragungselemente 2 und 3 dargestellt, die aus einem gemeinsamen geraden Führungskanalabschnitt 4 über übliche Führungselemente 5, 6 aus einer Oberseite des Gehäuses herausragen.

Das Gehäuse ist in dessen Längsrichtung in ein erstes Gehäuseteil 7 und ein zweites Gehäuseteil 8 geteilt. Die beiden Gehäuseteile 7,8 ergeben zusammengelegt bzw. miteinander verschraubt ein quaderförmiges, längliches, vierkantiges Gehäuse, welches mit Ausnahme an seinen beiden nicht bezeichneten offenen Stirnseiten und an der Anbringungsstelle der Führungselemente 5 und 6 im Betriebsfall geschlossen ist. Bei der Montage ist hingegen das zweite Gehäuseteil 8 von dem ersten Gehäuseteil 7 entfernt. In letzterem Zustand können im wesentlichen die in Fig. 1 dargestellten Elemente in dem ersten Gehäuseteil 7 angeordnet werden:

Die beiden Übertragungselemente 2 und 3 sind in einem aus mehreren Führungskanalabschnitten bestehenden Führungskanal eingelegt, der in der Darstellung gemäß Fig. 2 praktisch über seine gesamte Länge von den beiden Übertragungselementen 2 und 3 eingenommen wird. Der Führungskanal umfaßt außer dem gemeinsamen Führungskanalabschnitt 4 und je einem nicht bezeichneten gekrümmten Umlenkbereich an Zahnrollen 9 und 10 sich hieran anschließende einzelne gerade Führungskanalabschnitte 11 und 12, die über je einen gekrümmten Umlenkabschnitt 13,14 in der Nähe von nicht bezeichneten Gehäuseenden in weitere einzelne gerade Führungskanalabschnitte 15,16 übergehen. Die beiden über den Umlenkabschnitt 13 bzw. 14 jeweils miteinander in Verbindung stehenden einzelnen geraden Führungskanalabschnitte 11,15 bzw. 12,16 bilden somit, wie aus Fig. 2 ersichtlich, im wesentlichen U-förmige Verläufe des gesamten Führungskanals, der durch die Übertragungselemente 2 und 3 mehr oder weniger ausgefüllt ist, je nach dem wie weit die miteinander verzahnten Abschnitte der Übertragungselemente 2,3 aus den Führungselementen 5,6 herausgedrückt sind.

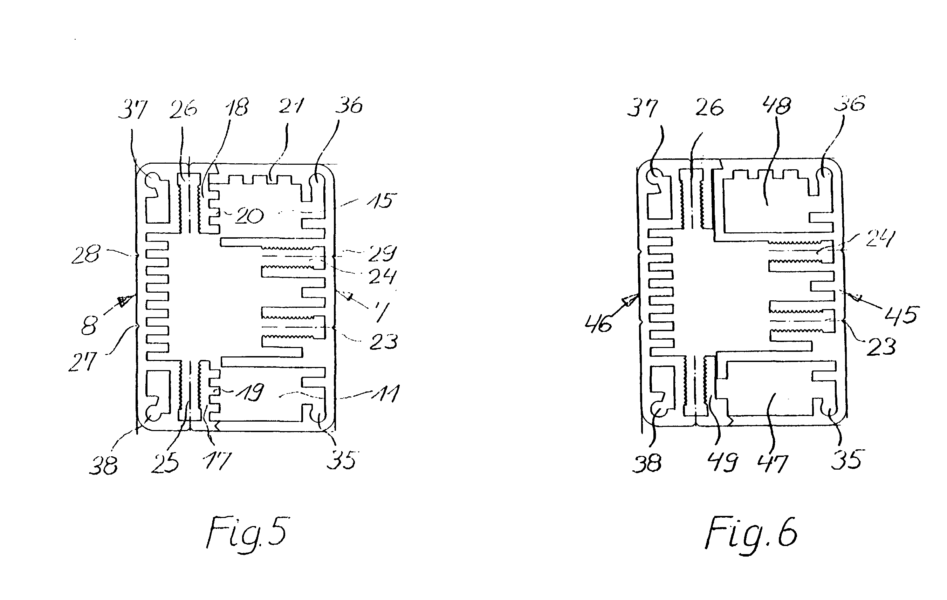

Wesentlich ist, daß die einzelnen geraden Führungskanalabschnitte innen aus dem Gehäuse ausgeformt sind, wie aus den Fig. 3 und 5 ersichtlich. Dabei ist der überwiegende, geschlossene Teil der einzelnen geraden Führungskanalabschnitte 11,12,15,16 aus dem ersten Gehäuseteil 7 ausgeformt, so daß diese seitlich offen sind, und diese offene Seite ist durch Stege 17,18 abgedeckt, die aus dem zweiten Gehäuseteil 8 ausgeformt sind. Dabei setzt die Abdeckung voraus, daß das zweite Gehäuseteil 8 auf das erste Gehäuseteil 7 aufgesetzt und mit diesem verschraubt ist. Diese Gestaltung des ersten Gehäuseteils 7 und des zweiten Gehäuseteils 8 ist im einzelnen aus dem Querschnitt ersichtlich, der in Fig. 5 größer dargestellt ist. Die die einzelnen Führungskanalabschnitte 11 und 15 abdeckenden Stege 17,18 in dem zweiten Gehäuseteil 8 weisen zur Gewichtsersparnis Rippen, z.B. 19,20, auf. Ähnliche Rippen, z.B. 21, können auch in den geraden Führungskanalabschnitten, z.B. 15, ausgeformt sein.

In Längsrichtung, also parallel zu den einzelnen geraden Führungskanalabschnitten 11 und 12, verlaufen im Innern des Gehäuses, welches aus den beiden Gehäuseteilen 7 und 8 gebildet ist, an einer Seite offene Schraubkanäle 23,24 in dem Gehäuseteil 7 sowie 25,26 in dem zweiten Gehäuseteil 8. Die Schraubkanäle sind zur Innenseite des Gehäuses hin offen, so daß von der gegenüberliegenden Außenseite des Gehäuses her eine oder mehrere nicht dargestellte Schrauben in je eine der Schraubkanäle 23-26 eingeschraubt werden können. Für die Schraubverbindung können die Schraubkanäle innen mit Zahnungen versehen sein, aber auch glattflächig sein, wenn selbstschneidende Schrauben verwendet werden. Zur Zentrierung der Schrauben bezüglich der Schraubkanäle sind mit diesen fluchtende Bohrzentrierungen, z.B. 27-30, an den gegenüberliegenden Außenseiten der Gehäuseteile 7,8 angebracht. Beispielsweise können in die Bohrzentrierungen 27,28 Löcher gebohrt werden, die zur Aufnahme von Schrauben dienen, welche das zweite Gehäuseteil 8 mit dem ersten Gehäuseteil 7 verschrauben, indem diese Schrauben in die Schraubkanäle 23,24 eingeschraubt werden.

In Fig. 2 sind Mittellinien der Schraubkanäle 23,24 mit 23a,24a beziffert. Diese Schraubkanäle dienen auch zur Anbringung von Umlenkteilen 31,32 bzw. 33,34 nahe den Enden des Gehäuses, die jeweils einen gekrümmten Umlenkabschnitt des Führungskanals bilden.

Aus Fig. 5 können in den Eckbereichen der Gehäuseteile 7,8 weitere in Richtung der nicht dargestellten Längsachse orientierte Schraubkanäle 35-38 ersehen werden, die dazu geeignet sind, Schrauben 39-42 aufzunehmen, die einen Deckel, z.B. 43, an je einer Stirnseite des Gehäuses verschrauben, um das Gehäuse auch an den Stirnseiten zu schließen, womit gleichzeitig das Gehäuse versteift werden kann.

In Fig. 5 nicht bezeichnete weitere Rippen, insbesondere in dem zweiten Gehäuseteil 8, dienen ebenfalls zur Gewichtsersparnis.

Zu der zweiten Variante des Gehäuses gemäß Fig. 6 werden, soweit die zweite Variante die gleichen Formmerkmale wie die erste Variante aufweist, gleiche Bezugszeichen verwendet. Die zweite Variante mit dem ersten Gehäuseteil 45 und dem zweiten Gehäuseteil 46 unterscheidet sich von der ersten Variante durch die Gestaltung des Führungskanals. Bei der zweiten Variante ist nur ein Führungskanalabschnitt 47 in dem ersten Gehäuseteil 45 teilweise seitlich offen, während der einzelne gerade Führungskanalabschnitt 48 geschlossen ist. Das zweite Gehäuseteil 46 weist innen zwei aus ihm ausgeformte Stege 49,50 auf, von denen der Steg 49 teilweise außen an dem einzelnen geraden Führungskanalabschnitt 47 anliegt und diesen im übrigen verschließt, während der Steg 50 nur außen an dem weiteren geraden Führungskanalabschnitt 48 anliegt.

Die Schraubkanäle können auch zur Montage des geschlossenen Gehäuses, beispielsweise an einem Bauwerksteil, verwendet werden, damit die Einrichtung die von dem Antriebsmotor 1 über ein Getriebe und die Zahnrollen 9,10 auf die verzahnten Übertragungselemente 2,3 ausgeübte Kraft sicher auf ein zu betätigendes Teil übertragen werden kann und das Gehäuse die Reaktionskraft aufnimmt.

## Patentansprüche

1. Einrichtung zur Übertragung einer Kraft, insbesondere Druckkraft, längs einer im wesentlichen geraden Strecke mit mindestens zwei länglichen, gegliederten, einseitig krümmungsfähigen Übertragungselementen (2, 3), welche in einem Führungskanal längs der geraden Strecke geführt und in einem gemeinsamen geraden Führungskanalabschnitt (4) reißverschlußartig zusammengeführt sind, wobei beidseitig des gemeinsamen geraden Führungskanalabschnitts (4) zwei Zahnrollen (9, 10) angeordnet sind, von denen eine in eines der beiden Übertragungselemente (2, 3) eingreift und aus je einem einzelnen Führungskanalabschnitt (11, 12, 15, 16) eines Führungskanals in den gemeinsamen geraden Führungskanalabschnitt (4) umlenkt, sowie mit einem Gehäuse, welches die nicht zusammengeführten Abschnitte der Übertragungselemente (2, 3), den Führungskanal und die Zahnrollen (9, 10) aufnimmt,
**dadurch gekennzeichnet,**
**dass** das Gehäuse in dessen Längsrichtung in zwei Gehäuseteile (7, 8) geteilt ist und
**dass** aus wenigstens einem der beiden Gehäuseteile (7, 8) innen der Führungskanal mit mindestens einem offenen Führungskanalabschnitt (11, 12) ausgeformt ist, sowie in einem ersten der beiden voneinander entfernten Gehäuseteile (7, 8) an einer Seite offene Schraubkanäle (23 - 26, 35 - 38) innen ausgeformt sind, die geeignet sind, in Schraubverbindung Schrauben aufzunehmen, mit denen insbesondere die beiden Gehäuseteile (7, 8) verschraubbar sind.

2. Einrichtung nach Anspruch 1,
**dadurch gekennzeichnet,**
**dass** der Führungskanal einschliesslich mindestens eines seitlich offenen Führungskanalabschnitts (47) aus dem ersten (45) der beiden Gehäuseteile (45, 46) innen ausgeformt ist und **dass** aus dem zweiten (46) der beiden Gehäuseteile (45, 46) innen ein Steg (49) ausgeformt ist, der zumindest an dem seitlich offenen Führungskanalabschnitt (47) seitlich zur Anlage gelangt, wenn die beiden Gehäuseteile (45, 46) miteinander verschraubt sind.

3. Einrichtung nach den Ansprüchen 1 und 2,
**dadurch gekennzeichnet,**
**dass** aus dem ersten (45) der beiden Gehäuseteile (45, 46) mehrere einzelne gerade Führungskanalabschnitte (47, 48) ausgeformt sind, von denen mindestens einer (47) seitlich offen ist, und **dass** aus dem zweiten (46) der beiden Gehäuseteile (45, 46) innen ein Steg (49) ausgeformt ist, der zumindest an dem seitlich offenen Führungskanalabschnitt (47) seitlich zur Anlage gelangt, wenn die beiden Gehäuseteile (45, 46) miteinander verschraubt sind.

4. Einrichtung nach den Ansprüchen 1 und 2,
**dadurch gekennzeichnet,**
**dass** alle einzelnen geraden Führungskanalabschnitte (11, 12) seitlich vollständig offen aus dem ersten (7) der beiden Gehäuseteile (7, 8) innen ausgeformt sind und **dass** aus dem zweiten (8) der beiden Gehäuseteile (7, 8) innen Stege (17, 18) ausgeformt sind, die zumindest einen für die seitliche Führung des Übertragungselements (2, 3) in dem Führungskanal wesentlichen Abschnitt seitlich abdecken, wenn die beiden Gehäuseteile (2, 3) miteinander verschraubt sind.

5. Einrichtung nach den Ansprüchen 1-4,
**dadurch gekennzeichnet,**
**dass** der Führungskanal beidseitig des gemeinsamen geraden Führungskanalabschnitts (4) im wesentlichen U-förmig mit je einem gekrümmten Umlenkabschnitt (13, 14) zwischen zwei geraden Führungskanalabschnitten (11, 15; 12, 16) ausgebildet ist, **dass** aus wenigstens dem einen der beiden Gehäuseteile (2, 3) nur die geraden Führungskanalabschnitte (11,15; 12, 16) ausgeformt sind und **dass** die gekrümmten Umlenkabschnitte (13,14) durch Umlenkteile (31 - 34) gebildet sind, die mit Schraubkanälen (23, 24) in den ersten Gehäuseteil (2) verschraubt sind.

6. Einrichtung nach den Ansprüchen 1 - 5,
**dadurch gekennzeichnet,**
**dass** das quaderförmige, längliche Gehäuse an dessen Stirnseiten mit Deckeln (43, 44) verschlossen ist, die mit Schraubkanälen (37, 38) in den Gehäusehälften (2, 3) verschraubt sind.

7. Einrichtung nach einem der vorangehenden Ansprüche,
**dadurch gekennzeichnet,**
**dass** aus den Gehäusehälften (2, 3) aussen Bohrzentrierungen (27-30) ausgeformt sind, die mit den Schraubkanälen (23-26) in dem Gehäuseinnern fluchten.

## Claims

1. Device for transmitting a force, in particular a compressive force, along a substantially straight path comprising at least two elongated, sectioned, unilaterally bendable transmission elements (2, 3) guided within a guide channel along said straight path and alternatingly joined together in a common straight guide channel section (4), wherein on both sides of said common straight guide channel section (4) two sprocket rolls (9, 10) are provided one of which engaging into one of said two transmission elements (2, 3) and deviating it from one individual guide channel section (11, 12, 15, 16) each of a guide channel into said common straight guide channel section (4), and a housing which incorporates the sections not joined of said transmission elements (2, 3), said guide channel and said sprocket rolls (9, 10), **characterized in that** said housing is divided along its longtitudinal direction into two housing portions (7, 8) and that in the interior of at least one of said two housing portions (7, 9) said guide channel is shaped out having at least one open guide channel section (11, 12), and in the interior of one first of said spaced two housing portions (7, 8) unilaterally open screw channels (23 - 26, 35 - 38) are shaped out, suitable to receive screws in screw connection, by means of which said two housing portions (7, 8), in particular, may be screwed together.

2. Device according to claim 1, **characterized in that** said guide channel which includes at least one laterally open guide channel section (47) is shaped out in the interior from the first (45) of said two housing portions (45, 46) and that from the second (46) of said housing portions (45, 46) a bar (49) is shaped out in the interior which will at least lie at one side against said laterally open guide channel section (47) when said two housing portions (45, 46) are screwed together.

3. Device according to claims 1 and 2, **characterized in that** from said first (45) of said two housing portions (45, 46) a plurality of single straight guide channel sections (47, 48) are shaped out of which at least one (47) is laterally open and that from the second (46) of said two housing portions (45, 46) a bar (49) is shaped out in the interior which will at least lie at one side against said laterally open guide channel section (47) when said two housing portions (45, 46) are screwed together.

4. Device according to claims 1 and 2, **characterized in that** all individual straight guide channel sections (11, 12), are shaped out in the interior laterally completely open from the first (7) of said two housing portions (7, 8) and that from the second (8) of said two housing portions (7, 8) bars (17, 18) are shaped out in the interior laterally covering at least one section which is substantial for the lateral guiding of said transmission element (2, 3) in the guide channel when said two housing portions (2, 3) are screwed together.

5. Device according to claims 1 to 4, **characterized in that** said guide channel is formed in substantially U-shaped form on both sides of said common straight guide channel section (4) having a bent deviating section (13, 14) between two straight guide channel sections (11, 15; 12, 16), that from at least one of the said two housing portions (2, 3) only the straight guide channel sections (11, 15; 12, 16) are shaped out, and that said bent deviating sections (13, 14) are formed by deviating portions (31 - 34) which are screwed together with screw channels (23, 24) within said first housing portion (2).

6. Device according to claims 1 - 5, **characterized in that** the blockshaped elongated housing is closed at the front sides thereof by lids (43, 44) screwed to screw channels (37, 38) in said housing halves (2, 3).

7. Device according to one of the foregoing claims, **characterized in that** from said housing halves (2, 3), at the outside thereof, bore centerings (27 - 30) are shaped out which are in alignment with screw channels (23 - 26) within the housing interior.

## Revendications

1. Dispositif pour la transmission d'une force, notamment d'une force de compression, le long d'un trajet sensiblement rectiligne, comportant au moins deux organes de transmission allongés (2, 3), divisés en plusieurs éléments et aptes à s'incurver d'un côté, qui sont guidés dans un canal de guidage, le long du trajet rectiligne, et sont réunis à la manière d'une fermeture à glissière dans un tronçon commun rectiligne de canal de guidage (4), alors que de part et d'autre du tronçon commun rectiligne de canal de guidage (4), sont disposés deux galets dentés (9, 10), dont un engrène dans fun des deux organes de transmission (2, 3) et le dévie d'un tronçon individuel respectif de canal de guidage (11, 12, 15, 16) d'un canal de guidage dans le tronçon commun rectiligne de canal de guidage (4), ainsi qu'un carter, qui abrite les tronçons non réunis des organes de transmission (2, 3), le canal de guidage et les galets dentés (9, 10),
**caractérisé**
**en ce que** le carter est divisé, dans le sens de sa longueur, en deux éléments de carter (7, 8) et
**en ce que** le canal de guidage est formé sur l'un au moins des deux éléments de carter (7, 8), à l'intérieur de celui-ci, en ayant au moins un tronçon ouvert de canal de guidage (11, 12), de même que sur un premier des deux éléments de carter (7, 8) détachés l'un de l'autre, sont intérieurement formés des canaux à vis (23 à 26, 35 à 38) ouverts d'un côté, qui sont adaptés pour recevoir, en liaison vissée, des vis à l'aide desquelles, notamment, les deux éléments de carter (7, 8) peuvent être assemblés par vissage.

2. Dispositif selon la revendication 1,
**caractérisé**
**en ce que** le canal de guidage, y compris au moins un tronçon ouvert latéralement de canal de guidage (47), est formé sur le premier (45) des deux éléments de carter (45, 46), à l'intérieur de celui-ci, et en ce que sur le second (46) des deux éléments de carter (45, 46), est intérieurement formée une ailette (49), qui vient se mettre latéralement en appui au moins contre le tronçon ouvert latéralement de canal de guidage (47), lorsque les deux éléments de carter (45, 46) sont vissés l'un à l'autre.

3. Dispositif selon les revendications 1 et 2,
**caractérisé**
**en ce que** sur le premier (45) des deux éléments de carter (45, 46), sont formés plusieurs tronçons individuels rectilignes de canal de guidage (47, 48), dont au moins un (47) est ouvert latéralement, et en ce que sur le second (46) des deux éléments de carter (45, 46), est intérieurement formée une ailette (49), qui vient se mettre latéralement en appui au moins contre le tronçon ouvert latéralement de canal de guidage (47), lorsque les deux éléments de carter (45, 46) sont vissés l'un à l'autre.

4. Dispositif selon les revendications 1 et 2,
**caractérisé**
**en ce que** tous les tronçons individuels rectilignes de canal de guidage (11, 12) sont formés, complètement ouverts latéralement, sur le premier (7) des deux éléments de carter (7, 8), à l'intérieur de celui-ci, et en ce que sur le second (8) des deux éléments de carter (7, 8), sont intérieurement formées des ailettes (17, 18), qui recouvrent latéralement au moins un tronçon important pour le guidage latéral de l'organe de transmission (2, 3) dans le canal de guidage, lorsque les deux éléments de carter (2, 3) sont vissés l'un à l'autre.

5. Dispositif selon les revendications 1 à 4,
**caractérisé**
**en ce que** le canal de guidage est constitué, de chaque côté du tronçon commun rectiligne de canal de guidage (4), sous sensiblement la forme d'un U, d'un tronçon de renvoi incurvé respectif (13, 14) entre deux tronçons rectilignes de canal de guidage (11, 15; 12, 16), en ce que sur au moins l'un des deux éléments de carter (2, 3), seuls sont formés les tronçons rectilignes de canal de guidage (11, 15; 12, 16) et en ce que les tronçons de renvoi incurvés (13, 14) sont définis par des pièces de renvoi (31 à 34), qui sont vissées à l'aide de canaux à vis (23, 24) dans le premier élément de carter (2).

6. Dispositif selon les revendications 1 à 5,
**caractérisé**
**en ce que** le carter allongé, de forme parallélépipédique, est fermé, au niveau de ses faces frontales, avec des couvercles (43, 44) qui sont vissés à l'aide de canaux à vis (37, 38) dans les moitiés de carter (2, 3).

7. Dispositif selon l'une des revendications précédentes,
**caractérisé**
**en ce que** sur les moitiés de carter (2, 3), sont formés extérieurement des points de centrage (27 à 30) pour le perçage, qui sont alignés avec les canaux à vis (23 à 26) pratiqués à l'intérieur du carter.
